## Europäisches Patentamt
## European Patent Office
## Office européen des brevets

(19)

(11) Numéro de publication: **0 014 110**
**B1**

(12) **FASCICULE DE BREVET EUROPEEN**

(45) Date de publication du fascicule du brevet: **02.03.83**

(51) Int. Cl.³: **H 04 B 1/46**

(21) Numéro de dépôt: **80400016.4**

(22) Date de dépôt: **08.01.80**

(54) Emetteur-récepteur et son utilisation dans un réseau de télécommunications.

(30) Priorité: **23.01.79 FR 7901640**

(43) Date de publication de la demande:
**06.08.80 Bulletin 80/16**

(45) Mention de la délivrance du brevet:
**02.03.83 Bulletin 83/9**

(84) Etats contractants désignés:
**DE GB IT NL SE**

(56) Documents cités:
**DE - A - 2 128 889**
**GB - A - 1 503 318**
**US - A - 3 397 401**

**ELECTRON, vol. 29, no. 4, avril 1973.**
**Rotterdam, NL HOEK "De TRIO zendontvanger,**
**serie 515", pages 160—164.**

(73) Titulaire: **THOMSON-CSF**
**173, Boulevard Haussmann**
**F-75379 Paris Cedex 08 (FR)**

(72) Inventeur: **Deman, Pierre**
**"THOMSON-CSF" - SCPI 173, bld Haussmann**
**F-75360 Paris Cedex 08 (FR)**
Inventeur: **Pimentel, Alberto**
**"THOMSON-CSF" - SCPI 173, bld Haussmann**
**F-75360 Paris Cedex 08 (FR)**
Inventeur: **Ben Sadou, Jean-Claude**
**"THOMSON-CSF" - SCPI 173, bld Haussmann**
**F-75360 Paris Cedex 08 (FR)**
Inventeur: **de Riviere, Charles**
**"THOMSON-CSF" - SCPI 173, bld Haussmann**
**F-75360 Paris Cedex 08 (FR)**

(74) Mandataire: **Turlèque, Clotilde et al,**
**THOMSON-CSF SCPI 173, Bld Haussmann**
**F-75379 Paris Cedex 08 (FR)**

Courier Press, Leamington Spa, England.

Emetteur-récepteur et son utilisation dans un réseau de
télécommunications

La présente invention concerne les postes
émetteurs-récepteurs fonctionnant en modulation d'amplitude à bande latérale unique et
comportant dans la partie émettrice des moyens
de compression de l'amplitude des signaux
vocaux de modulation.

De tels émetteurs-récepteurs permettant
d'améliorer le bilan de transmission grâce à la
réduction importante du rapport entre la puissance crête et la puissance moyenne des
signaux de modulation introduite par les
moyens de compression.

Ces émetteurs-récepteurs comportent en
outre des discriminateurs parole-bruit afin
d'éliminer le bruit en l'absence de signaux
vocaux. Dans ce but, il est actuellement connu
d'utiliser soit des discriminateurs parole-bruit
ayant de bonnes performances mais de coût
élevé, soit des discriminateurs parole-bruit à
bon marché mais ayant de moins bonnes performances.

La présente invention a pour objet un détecteur d'activité vocale peu cher ayant d'aussi
bonnes performances que les meilleurs discriminateurs parole-bruit connus. Ceci est obtenus,
en particulier, en réalisant une détection des
fronts raides des signaux reçus.

Selon l'invention, un émetteur-récepteur
dans lequel l'émetteur émet des signaux compressés en amplitude uniquement lorsque des
signaux vocaux sont reçus sur son entrée et
dans lequel le récepteur comporte: un circuit
amplificateur; un interrupteur électronique
ayant une borne d'entrée et une borne de sortie
respectivement couplées à la sortie du circuit
amplificateur et à la sortie du récepteur, et une
entrée de commande; et des moyens de
commande de l'interrupteur, est caractérisé en
ce que les moyens de commande comportent:
des moyens de détection des transitions rapides
d'amplitude, couplés à la sortie du circuit
amplificateur ayant deux sorties pour fournir
respectivement des impulsions de début et de
fin d'activité vocale; et un circuit logique ayant
deux entrées respectivement couplées aux deux
sorties des moyens de détection, et une sortie
couplée à l'entrée de commande de l'interrupteur et fournissant un signal de commande
de fermeture de l'interrupteur entre une
impulsion de début et une impulsion de fin
d'activité vocale.

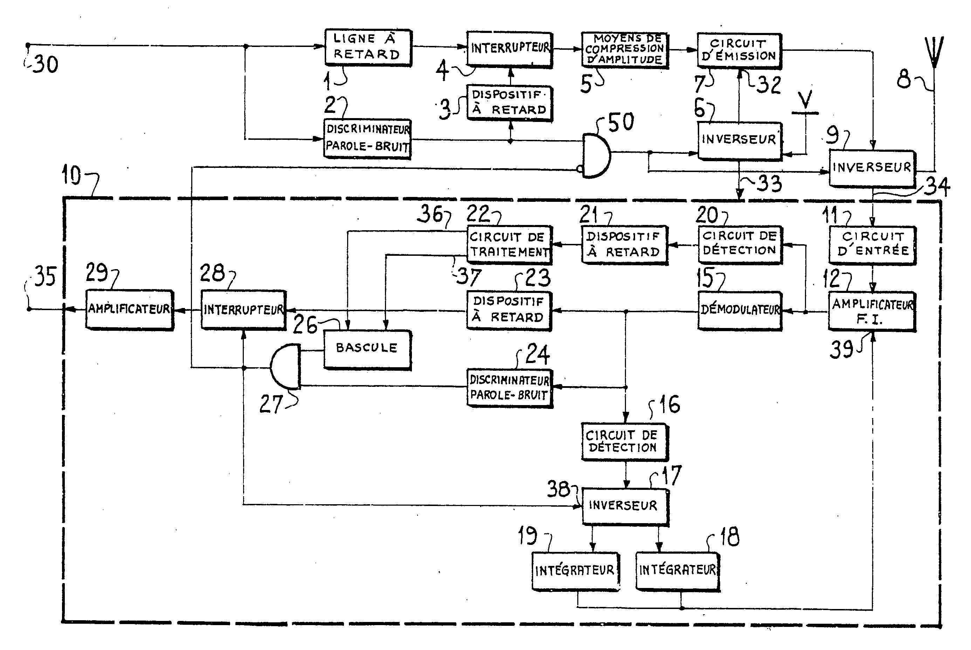

L'invention sera mieux comprise et d'autres
caractéristiques apparaîtront à l'aide de la
description ci-après et de la figure s'y rapportant qui représente un émetteur-récepteur selon
l'invention.

Sur cette figure, une borne d'entrée 30,
destinée à recevoir des signaux à transmettre,
est reliée d'une part à l'entrée d'une première
ligne à retard 1 dont la sortie est connectée à
l'entrée de modulation d'un circuit 7, à travers
un interrupteur électronique 4 et des moyens de
compression d'amplitude 5 disposés en série, et
d'autre part à l'entrée d'un discriminateur
parole-bruit 2 dont la sortie est connectée à
l'entrée de commande de l'interrupteur électronique 4, à travers un premier dispositif à
retard 3, ainsi qu'à une première entrée d'une
porte ET, 50, dont la sortie est reliée aux entrées
de commande de deux inverseurs électroniques 6 et 9. La deuxième entrée complémentée de la porte ET, 50, est reliée à la sortie
d'une porte ET, 27, du récepteur 10.

Le circuit 7 comprend les étages classiques
de modulation et d'amplification à haute
fréquence. L'inverseur électronique 6 permet de
commuter la source V de tensions d'alimentation soit à l'entrée d'alimentation 32 du circuit
7, soit à l'entrée d'alimentation 33 fournissant
les tensions d'alimentation à l'ensemble des
circuits du récepteur 10 par des liaisons non
représentées.

L'inverseur électronique 9 permet de connecter une antenne 8 soit à la sortie du circuit 7
soit à l'entrée de signal 34 du récepteur 10.

L'entrée de signal 34 du récepteur 10 est
reliée à l'entrée d'un démodulator 15 à travers
un circuit d'entrée 11 suivi d'un amplificateur à
fréquence intermédiaire 12 comportant une
entrée de commande de gain 39.

La sortie du démodulateur 15 est reliée à la
sortie 35 du récepteur, à travers un deuxième
dispositif à retard 23, un interrupteur électronique 28 et un amplificateur 29 disposés en
série. La boucle de commande automatique de
gain de l'amplificateur 12 dont l'entrée est
également reliée à la sortie du démodulateur 15
comporte un circuit de détection 16, sont la
sortie est connectée, à travers un inverseur électronique 17 ayant une entrée de commande 38,
à l'entrée de l'un ou l'autre de deux intégrateurs 18 et 19 dont les sorties sont reliées à
l'entrée de commande de gain 39.

La sortie de l'amplificateur 12 est reliée
d'autre part à l'entrée d'un circuit de traitement
22, à travers un deuxième circuit de détection
20 et un troisième dispositif à retard 21
disposés en série, ayant deux sorties 36 et 37.
L'ensemble de ces éléments constitue des
moyens de détection des transitions rapides
d'amplitude dont les deux sorties fournissent
respectivement des impulsions de début et de
fin d'activité vocale. Ces deux sorties alimentent
respectivement une première et une seconde
entrée d'une bascule 26. La sortie de cette
bascule 26 est reliée à une première entrée de
la porte ET, 27, dont une seconde entrée est
couplée à la sortie du démodulateur 15 à
travers un discriminateur parole-buit bruit 24.
La sortie de la porte ET, 27 est reliée à l'entrée
de commande 38 de l'inverseur électronique
17, et à l'entrée de commande de l'interrupteur
électronique 28.

L'ensemble des éléments constitué de la bascule 26, du circuit de traitement 22, du troisième dipositif à retard 21, du deuxième circuit de détection 20, et de la porte ET, 27, forme les moyens de commande de l'interrupteur 28 et leur sortie celle de la porte ET, 27.

Le fonctionnement de cet émetteur-récepteur est le suivant.

Le discriminateur parole-bruit 2 et le dispositif de détection d'activité vocale du récepteur délivrent respectivement un premier et un deuxième signal logique qui sont à l'état "1" lorsque les signaux reçus sur leur entrée respective sont des signaux vocaux. La durée de l'état "1" de ces premier et deuxième signaux est identique à celle des signaux vocaux, mais décalée d'un temps $T_1$ (correspondant au temps d'élaboration de ces signaux). Le premier signal est transmis à la première entrée de la porte ET, 50, dont la deuxième entrée complémentée reçoit le deuxième signal. La sortie de cette porte ET, 50, délivre un troisième signal logique de niveau logique "1" (avec un retard $T_1$) uniquement lorsque des signaux vocaux sont reçus sur la borne 30 de l'émetteur et que l'entrée du dispositif de détection d'activité vocale du récepteur n'en reçoit pas. Ce troisième signal logique est transmis à l'entrée de commande des inverseurs électroniques 6 et 9 qui réalisent une commutation d'alternat automatique en connectant l'antenne 8 et la tension d'alimentation V respectivement sur la sortie et sur l'entrée 32 du circuit 7 lors de l'état "1" de ce troisième signal logique, et connectant ces mêmes éléments sur les entrées 34 et 33 du récepteur 10 lors de l'état "0" de ce troisième signal logique.

L'entrée 33 symbolise l'entrée d'alimentation de tous les éléments du récepteur 10, les connections n'étant pas représentées afin de n'alourdir ni le schéma ni la description.

Ce signal logique est également appliqué à l'entrée de commande de l'interrupteur électronique 4 après un retard $T_2$, égal au temps d'établissement de la tension d'alimentation du circuit 7, apporté par le premier dispositif à retard 3. La ligne à retard 1 fournit un retard égal à $T_1+T_2$, ainsi l'interrupteur électronique 4 sera fermé à l'instant même où arrivera un signal vocal sur son entrée et ne le restera que pendant la durée de ce signal vocal. Les signaux vocaux transmis par cet interrupteur électronique 4 sont ensuite amplifiés et compressés par les moyens de compression d'amplitude 5 puis transmis à l'antenne 8 par le circuit 7.

Cet émetteur délivre des signaux vocaux d'amplitude constante en période d'activité vocale par action du compresseur 5, et ne délivre aucun signal (au bruit près de ce compresseur d'amplitude) en dehors de ces périodes.

Les signaux vocaux reçus sur l'antenne 8 sont transmis au démodulateur 15 à travers le circuit d'entrée 11 et l'amplificateur à fréquence intermédiaire 12. Les signaux de sortie de l'amplificateur 12 sont appliqués à l'entrée du circuit de détection 20. Ce circuit 20 détecte les transitions rapides d'amplitude et délivre des impulsions positives et négatives respectivement pour des transitions bruit-signal et signal-bruit; ces impulsions sont ensuite appliquées, avec un retard $T_3$ dû au troisième dispositif à retard 21, à l'entrée du circuit de traitement 22. Ce dernier délivre une impulsion positive sur sa sortie 37 lorsqu'il reçoit une impulsion positive (correspondant à un début de message reçu par l'antenne 8), et la délivre sur sa sortie 36 lorsqu'il reçoit une impulsion négative (correspondant à une fin de message reçu par l'antenne 8). Le signal de la sortie 37 du circuit de traitement 22, appliqué sur la seconde entrée de la bascule 26, permet à cette dernière de générer sur sa sortie un signal logique à l'état "1", qui y subsiste tant que le signal fourni par la sortie 36 du circuit 22 n'est pas appliqué sur la première entrée de cette bascule 26. La durée de cet état "1" est donc égale à la durée du signal vocal reçu sur l'antenne 8. Le second discriminateur parole-bruit 24 (fonctionnant comme le discriminateur 2) fournit, à partir des signaux vocaux délivrés par la sortie du démodulateur 15, un signal logique synchrone de celui fourni par la bascule 26, le retard $T_3$ du troisième dispositif à retard 21 étant égal au temps nécessaire pour synchroniser les signaux appliqués à l'entrée de la porte 27, c'est-à-dire voisin du temps d'élaboration du signal de sortie de ce discriminateur 24. Le signal de sortie de ce dernier permet grâce à la porte ET, 27, de valider toute la durée de l'état "1" du signal logique de sortie de la bascule 26, lequel signal commande, à travers cette porte, la fermeture de l'interrupteur électronique 28. Cette validation permet d'éviter la fermeture de l'interrupteur sur de fausses transitions bruit-parole dues à des signaux parasites (par exemple: réception de signaux télégraphiques). Les signaux vocaux fournis à l'entrée de cet interrupteur électronique 28 sont retardés par le deuxième dispositif à retard 23 d'une durée $T_4$ correspondant au retard total avec lequel cet interrupteur assure la transmission des signaux vocaux à partir de l'instant où ils apparaissent en sortie du démodulateur 15, $T_4$ étant en pratique peu supérieur à $T_3$.

Ainsi les signaux recueillis sur la borne 35 sont des signaux vocaux exempt de bruit pendant la durée intersyllabique.

Les signaux vocaux délivrés par le démodulateur 15 sont détectés par le circuit de détection 16 puis transmis à l'entrée de commande de gain de l'amplificateur 12, à travers l'un des deux intégrateurs 18 ou 19, suivant l'état logique du signal de sortie de la porte ET, 27, qui commande l'inverseur électronique 17. Lorsque le signal logique de commande de l'inverseur électronique 17 est à l'état "1", conséquence d'un signal vocal présent dans la chaîne de réception, la sortie du circuit de détection 16 est connectée à l'intégrateur 18, de faible constante de temps afin que la tension de commande de gain puisse corriger les fluctuations de niveau du signal reçu dues à des affaiblissements fugitifs liés à la propagation. Lorsque le signal logique de commande est à l'état "0", conséquence d'une absence de signal vocal dans la chaîne de réception, le signal de commande de gain traverse l'intégrateur 19, de forte constante de temps afin que le gain des amplificateurs varie lentement pendant les durées intersyllabiques.

L'invention n'est pas limitée au mode de réalisation décrit et représenté, en particulier l'interrupteur électronique 4 et le premier dispositif à retard 3 peuvent être supprimés pour permettre un coût de réalisation moindre.

De tels dispositifs sont notamment utilisables dans les réseaux de transmissions.

## Revendications

1. Emetteur-récepteur dans lequel l'émetteur émet des signaux compressés en amplitudue uniquement lorsque des signaux vocaux sont reçus sur son entrée et dans lequel le récepteur comporte: un circuit amplificateur (12); un interrupteur électronique (28) ayant une borne d'entrée et une borne de sortie respectivement couplées à la sortie du circuit amplificateur et à la sortie du récepteur, et une entrée de commande; et des moyens de commande de l'interrupteur, caractérisé en ce que les moyens de commande comportent: des moyens de détection (20, 21, 22) des transitions rapides d'amplitude, couplés à la sortie du circuit amplificatuer (12) et ayant deux sorties (36, 37) pour fournir respectivement des impulsions de début et de fin d'activité vocale; et un circuit logique (26) ayant deux entrées respectivement couplées aux deux sorties des moyens de détection, et une sortie couplée à l'entrée de commande de l'interrupteur et fournissant un signal de commande de fermeture de l'interrupteur entre une impulsion de début et une impulsion de fin d'activité vocale.

2. Emetteur-récepteur selon la revendication 1, dans lequel le récepteur comporte: un démodulateur (15) inséré entre la sortie du circuit amplificateur (12) et la borne d'entrée de l'interrupteur (28); un discriminateur parole-bruit (24) ayant une entrée couplée à la sortie du démodulateur et une sortie pour délivrer un signal caractéristique de la présence de signaux vocaux; un dispositif à retard (23) inséré en série entre la sortie du démodulateur et la borne d'entrée de l'interrupteur, la durée du retard de ce dispositif à retard étant telle que la fermeture de l'interrupteur coïncide avec la présence de signaux vocaux sur la borne d'entrée de l'interrupteur (28), caractérisé en ce que les moyens de détection comportent un dispositif à retard supplémentaire (21) ayant une durée de retard déterminée de manière que la constante de temps globale d'élaboration des impulsions de début et de fin d'activité vocale soit égale à celle du discriminateur parole-bruit et en ce que les moyens de commande de l'interrupteur comportent en outre une porte ET (27) ayant une première et une deuxième entrée respectivement couplées à la sortie du circuit logique (26) et à la sortie du discriminateur parole-bruit (24), et une sortie formant la sortie des moyens de commande de l'interrupteur.

3. Emetteur-récepteur selon la revendication 1, dans lequel le récepteur comporte un démodulateur (15) inséré entre la sortie du circuit amplificateur (12) et la borne d'entrée de l'interrupteur, caractérisé en ce que le circuit amplificateur a une entrée de commande de gain (39), le récepteur comportant en outre une boucle de commande automatique de gain dont l'entrée est reliée à la sortie du démodulateur (15), et qui comporte: un inverseur (17) ayant une entrée de signal couplée à l'entrée de la boucle par l'intermédiaire d'un circuit de détection (16), deux sorties reliées à un premier et un deuxième circuit d'intégration (18, 19) dont les constantes de temps respectives sont distinctes et prédéterminées et une entrée de commande couplée à la sortie des moyens de commande de l'interrupteur, pour coupler la sortie du démodulateur à l'entrée de commande de gain soit à travers le premier circuit d'intégration (18) soit à travers le deuxième circuit d'intégration (19).

4. Emetteur-récepteur selon l'une des revendications 1 à 3, comportant un dispositif d'alternat automatique (6, 9) ayant une entrée de commande, caractérisé en ce que la sortie des moyens de commande de l'interrupteur (28) est couplée à l'entrée de commande du dispositif d'alternat automatique.

5. Utilisation d'un émetteur-récepteur selon l'une des revendications précédentes dans un réseau de transmission.

## Patentansprüche

1. Sender/Empfänger, bei dem der Sender amplitudenkomprimierte Signale nur dann aussendet, wenn Stimmsignale an seinem Eingang empfangen werden, und bei welchem der Empfänger enthält: eine Verstärkerschaltung (12); einen elektronischen Unterbrecher (28) mit einem Eingangsanschluß und einem Ausgangsanschluß, von denen der erste an den Ausgang der Verstärkerschaltung und der zweite an den Ausgang des Empfängers angeschlossen ist, und einen Steuereingang aufweist, sowie Steuermittel zum Steuern des Unterbrechers, dadurch gekennzeichnet, daß die Steuermittel umfassen: Detektionsmittel (20, 21, 22) zum Erfassen der schnellen Amplitudenübergänge, welche an den Ausgang der Verstärkerschaltung (12) angekoppelt sind und zwei Ausgänge (36, 37) aufweisen, von denen der erste Stimmaktivitäts-Anfangsimpulse und der zweite Stimmaktivitäts-Endimpulse abgibt; und eine Logikschaltung (26) mit zwei Eingängen, die jeweils mit einem der zwei Ausgänge der Detektionsmittel verbunden sind, und einen Ausgang aufweist, der an den Steuereingang des Unterbrechers angekoppelt ist und ein Steuersignal zum Schließen des Unterbrechers zwischen einem Stimmaktivitäts-Anfangsimpuls und einem Stimmaktivitäts-Endimpuls liefert.

2. Sender/Empfänger nach Anspruch 1, bei dem der Empfänger umfaßt: einen Demodulator (15), der zwischen den Ausgang der Verstärkerschaltung (12) und den Eingangsanschluß des Unterbrechers (28) eingefügt ist; einen Sprache/Störsignal-Diskriminator (24) mit einem Eingang, der an den Ausgang des Demodulators angekoppelt ist, und einem Ausgang, der ein Signal abgibt, das charakteristisch für das Vorhandensein von Sprachsignalen ist; eine Verzögerungsvorrichtung (23), die in Reihe zwischen dem Ausgang des Demodulators und den Eingangsanschluß des Unterbrechers eingefügt ist, wobei die Verzögerungsdauer dieser Verzögerungsvorrichtung derart bemessen ist, daß das Schließen des Unterbrechers zusammenfällt mit dem Vorhandensein von Sprachsignalen an dem Eingangsanschluß des Unterbrechers (28), dadurch gekennzeichnet, daß die Detektionsmittel eine zusätzliche Verzögerungsvorrichtung (21) umfassen, deren Verzögerungsdauer so bestimmt ist, daß die gesamte Zeitkonstante für die Bildung der Sprachaktivitäts-Anfangs- und Endsignale gleich derjenigen des Sprache/Störsignal-Diskriminators ist, und daß die Steuermittel zum Steuern des Unterbrechers ferner eine AND-Schaltung (27) umfassen, deren erster Eingang mit dem Ausgang der Logikschaltung (26) und deren zweiter Eingang mit dem Ausgang des Sprache/Störsignal-Diskriminators (24) verbunden ist und deren Ausgang den Ausgang der Steuermittel zur Steuerung des Unterbrechers bildet.

3. Sender/Empfänger nach Anspruch 1, bei welchem der Empfänger einen Demodulator (15) umfaßt, der zwischen den Ausgang der Verstärkerschaltung (12) und den Eingangsanschluß des Unterbrechers eingefügt ist, dadurch gekennzeichnet, daß die Verstärkerschaltung einen Verstärkungssteuereingang (39) aufweist und daß der Empfänger ferner eine automatische Verstärkungsregelschleife umfaßt, deren Eingang mit dem Ausgang des Demodulators (15) verbunden ist und die umfaßt: einen Inverter (17) mit einem Signaleingang, der an den Eingang der Schleife über eine Detektionsschaltung (16) angekoppelt ist, zwei Ausgänge, die mit einer ersten bzw. mit einer zweiten Integrationsschaltung (18, 19) verbunden sind, deren Zeitkonstanten verschieden und vorbestimmt sind, und einen Steuereingang, der an den Ausgang der Steuermittel zum Steuern des Unterbrechers angekoppelt ist, um den Ausgang des Demodulators mit dem Verstärkungssteuereingang entweder über die erste Integrationsschaltung (18) oder über die zweite Integrationsschaltung (19) zu verbinden.

4. Sender/Empfänger nach einem der Ansprüche 1 bis 3, mit einer automatischen Wechselschaltung (6, 9), die einen Steuereingang aufweist, dadurch gekennzeichnet, daß der Ausgang der Steuermittel zum Steuern des Unterbrechers (28) an den Steuereingang der automatischen Wechselschaltung angekoppelt ist.

5. Verwendung eines Senders/Empfängers nach einem der vorstehenden Ansprüche für ein Übertragungsnetz.

**Claims**

1. Transmitter-receiver in which the transmitter transmits amplitude compressed signals only when voice signals are received on its input and in which the receiver comprises: an amplifier circuit (12); and electronic interrupter (28) having an input terminal and an output terminal coupled to the output of the amplifier circuit and to the output of the receiver, respectively, and a control input; and means for controlling the interrupter, characterized in that the control means comprise: detection means (20, 21, 22) for detecting fast amplitude transitions, coupled to the output of the amplifier circuit (12) and having two outputs (36, 37) for providing vocal activity beginning and end pulses, respectively; and a logic circuit (26) having two inputs coupled to the two outputs of the detection means, respectively, and an output coupled to the control input of the interrupter and providing an interrupter closing control signal between a vocal activity beginning pulse and a vocal activity end pulse.

2. Transmitter-receiver in accordance with claim 1, in which the receiver comprises: a demodulator (15) inserted between the output of the amplifier circuit (12) and the input terminal of the interrupter (28); a speech-noise discriminator (24) having an input coupled to the output of the demodulator and an output for supplying a signal which is characteristic of the presence of vocal signals; a delay device (23) inserted in series between the output of the demodulator and the input terminal of the interrupter, the delay duration of this delay device being such that closing of the interrupter is coincident with the presence of vocal signals at the input terminal of the interrupter (28), characterized in that the detection means comprise an additional delay device (21) having a delay duration determined in such a manner that the total time constant for generation of the vocal activity beginning and end signals is equal to that of the speech-noise discriminator, and in that the interrupter control means further comprise and AND-gate (27) having first and second inputs coupled to the output of the logic circuit (26) and the output of the speech-noise discriminator (24), respectively, and an output

**0014110**

forming the output of the interrupter control means.

3. Transmitter-receiver in accordance with claim 1, in which the receiver comprises a demodulator (15) inserted between the output of the amplifier circuit (12) and the input terminal of the interrupter, characterized in that the amplifier circuit has a gain control input (39), the receiver further comprising an automatic gain control loop the input of which is connected to the output of the demodulator (15), and which comprises: an inverter (17) having a signal input coupled to the input of the loop through a detection circuit (16), two outputs connected to first and second integration circuits (18, 19), respectively, the predetermined time constants of which are different from each other, and a control input coupled to the output of the interrupter control means, for coupling the output of the demodulator to the gain control input either through the first integration circuit (18) or through the second integration circuit (19).

4. Transmitter-receiver in accordance with any of claims 1 to 3, comprising an automatic alternating device (6, 9) having a control input, characterized in that the output of the control means of the interrupter (28) is coupled to the control input of the automatic alternating device.

5. Use of a transmitter-receiver in accordance with any of the preceding claims in a transmission network.

0014110